# EUROPEAN PATENT APPLICATION

(11) **EP 2 819 080 A1**
(43) Date of publication of application: **31.12.2014**
(21) Application number: 14170762.0
(22) Date of filing: 02.06.2014
(51) Int. Cl.: G06Q 20/32, G06Q 20/40, G06Q 20/20

(54) **Telecommunication system with authorization token**

(30) Priority: 28.06.2013 US 201361840614 P; 13.08.2013 US 201313966053
(71) Applicant: SAP SE, 69190 Walldorf (DE)
(72) Inventor: Tebbe, Harald, 69190 Walldorf (DE)
(74) Representative: Richardt Patentanwälte PartG mbB

(57) **Abstract**

The invention relates to a telecommunication system comprising an authorization server (120) for permitting quick authorization by means of a mobile telecommunication device also in an environment where no stable mobile network connection is available.

According to said system, the mobile device is configured to automatically request an authorization token from the authorization server well ahead of the actual authorization event. If no mobile network connection is available, the request is automatically and repeatedly resubmitted to the authorization server until the mobile network connection is re-established and the requested authorization code is received.

The authorization server is configured to transmit (506) the requested authorization token (740) to the mobile device (110) and to receive (508) the authorization token and information (760) relating to a product or service from a terminal (130). The authorization server validates (510) the authorization token and authorizes or denies the purchase of the product or service in dependence on a resource account associated with the user of the mobile device. The authorization server transmits (518) the authorization or the denial to the terminal.

## Description

### Field of the invention

The current disclosure relates to a telecommunication system, and in an embodiment, but not by way of limitation, a telecommunication system having offline capabilities.

### Background and related art

During mass events, e.g. sports events like soccer and ice hockey, there are thousands of people at an event location. In such a context, receiving and transmitting authentication data, e.g. biomedical information such as fingerprints, manually entered a PINs or the like to a terminal for being authorized for receiving a good or service is time consuming and thus not optimal for use in the context of mass events: each small delay at the terminal may result in long queues of waiting visitors.

Consequently, many sport arenas require authentication at a terminal by special RFID cards. Use of an RFID card involves the following: a customer has to buy special card in advance. Said card is optimized for rapid communication with the terminal type used in a particular building or arena where the mass event takes place. When the customer wants to authenticate at the terminal, e.g. for entering the arena or buying something at a food court or in a merchandise shop, the only option to authenticate is by using such a special card. The customer may not have to enter a PIN or sign a bill or count cash when using said special RFID card. As a result, the authorization process is very efficient and fast. However, a disadvantage to such special-purpose RFID cards is that not many people want to buy such a card and carry it as yet another card in his or her wallet.

### Summary

It is an objective of the present invention to provide for an improved telecommunication system and method for authentication at a terminal. The objective is solved by the features of the independent claims. Embodiments of the invention are given in the dependent claims. The embodiments of this invention can freely be combined with each other if they are not mutually exclusive.

In one aspect, the invention relates to a telecommunication system comprising an authorization server with a computer processor. The computer processor is configured to:
- transmit an authorization token to a mobile device, wherein the authorization token is associated with a resource account, wherein the authorization token enables the mobile device to create a code comprising the authorization token;
- receive from a terminal, in connection with a reading of the code and a purchase of a product or service, the authorization token and information relating to the product or service;
- validate the authorization token received from the terminal;
- compare the information relating to the product or service with information associated with the resource account; the information relating to the product or service may be, for example, the price of said product or service, discount information, the quantity and quantity discount information, or the like;
- in response to the comparison, determine that there is a sufficient amount of resources associated with the resource account to purchase the product or service, and authorize the purchase of the product or service;
- in response to the comparison, determine that there is an insufficient amount of resources associated with the resource account to purchase the product or service, and deny the purchase of the product or service;
- transmit the authorization or the denial to the terminal; and
- in response to the authorization of the purchase, apply a purchase amount to the resource account.

Said features may be advantageous, as they may significantly accelerate the authorization process without requiring the user to buy additional RFID cards for performing a payment. Today, mobile devices such as smart phones, net books and tabloid computers are so widespread that almost every visitor of a sporting event can safely be assumed to possess one. Thus, the visitor may use his mobile phone as the mobile device as described above and does not have to buy additional payment cards.

For example, the computer processor may be part of an authorization server that manages a plurality of resource accounts of a plurality of registered users.

An 'authorization token' as used herein is data that is or can be automatically evaluated and that indicates to a recipient either that an entity, e.g. a user or a device, is authorized for receiving a good or service or that said entity is not authorized to for receiving the good or service. The user may be a user of a mobile phone trying to receive a good or service at a terminal. For example, the authorization token' may consist of a sequence of alphanumerical characters. The length of said sequence may be predefined and/or may be of a minimum length to increase security. The authorization token may also be more complex. For example, it may be an SAML document or an element thereof.

A 'resource account' as used herein is a collection of data that is assigned to a user who has registered at a person or at an organization, e.g. a company or state or bank, providing the resource account. The account may comprise an indication of the amount of resources assigned to the user. Upon receiving a good or service, a corresponding amount of resources may be removed from the resource account.

A 'code' according to embodiments is data that comprises at least the authorization token and optionally also additional data in an encoded form. Depending on the embodiment, different types of encoding algorithms may be applied to generate the code. For example, the code can be a one-dimensional or two-dimensional code, e.g. a bar code, a matrix code, a QR code or the like. Alternatively, the encoding may comprise storing the authorization token and optionally also the additional data in a data structure, e.g. a messaging data object, that can be transferred from the mobile device to the terminal via an NFC interface or via any other interface that allows a quick exchange of data of a mobile device and a point of sales device. Said data structure may be an encrypted or unencrypted document, e.g. an XML document. Codes generated for being transferred via the NFC interface are also referred to as 'quality codes'.

A 'terminal' is an electronic, immobile data processing device that comprises an interface for receiving authorization data from a user and for granting or denying access to a good or service in dependence on an evaluation of the authorization data. The terminal may comprise or be connected to some hardware devices for receiving the authorization data and/or information associated with the good or service. According to some embodiments, the terminal comprises or is connected to a bar code scanner and/or an NFC interface device.

Depending on the embodiment, the 'validating' of the authorization token may comprise comparing the authorization token with a stored reference value, calculating a derivative data value, e.g. a hash value, and compare the derivative data value with a reference value. The reference value may be stored by the authorization token upon creation of the authorization token. The reference value may be a copy of the originally created authorization token or a derivative value thereof, e.g. a hash value.

The expression 'a processor being operable to' as used herein implies that the processor is configured to do something, e.g. execute a task. The configuration may be imposed, for example, by the hardware or firmware of the processor or by a software executed by said processor.

According to embodiments, the computer processor is operable to receive from the mobile device a request to create the resource account; and to create the resource account.

According to embodiments the authorization token comprises a unique token identification. This may be advantageous, as for each payment transaction, a unique authorization token is generated. This may increase security.

According to embodiments the computer processor is operable to impart the authorization token with a limited time of validity. This may increase security as after a predefined time span, the authorization token will be invalidated. This helps protecting the resources deposed on the resource account.

According to embodiments, a predefined sub-portion of the authorization is used for storing a time information, the time information indicating when said authorization token expires. The application program installed on the mobile device and/or the authorization server will automatically delete any authorization token and/or its reference value upon determining that the time information contained in said sub-portion of said authorization token has expired.

According to embodiments the computer processor is configured to transmit a mobile application to the user device. The mobile application is configured to collect user data from the user of the mobile device, the user data relating to the creation of the resource account. For example, the authorization server or another server may provide an application program, also referred to as 'app' for download by the mobile device. The app may comprise an interface for sending and receiving data to and from the authorization server. The app may also have stored an address of the authorization server, e.g. in the form of configuration data. Thus, the user does not have to manually enter address data of the authorization server in the app of his mobile phone.

According to embodiments the mobile device or the application installed on the mobile device automatically generates a request for an authorization token and sends the request to the authorization server. Depending on the embodiment, the request may automatically be generated and sent upon one of the following events: turning on the mobile device; starting the app installed on the mobile device; a user interacting with the app or the mobile device; repeatedly at a moment when a predefined time interval elapses; upon determining, by a position localization module of the mobile device, that the mobile device is currently located within a geographic area. The position localization module may be, for example, a GPS module or a module capable of Wi-Fi and cell tower triangulation. The geographic area may be, for example, a predefined area around a sports stadion, a predefined area around a shop or a cash desk system, or a predefined area around any other building or object. In some embodiments, the app comprises a geographic map and one or more areas in said map, and the app automatically generates and submits the request for the authorization token upon the position localization module determining that the mobile device is located within one of said areas. The app may repeatedly execute a program routine for checking if the request authorization token should be generated given the current time and/or the current position of the mobile device and/or other factors, e.g. some user-specific settings. If the sending of the request fails because no network connection between the mobile device and the authorization server is available, the app will repeatedly try sending the request until the network connection is re-established and the requested authorization code was successfully received by the app.

Said features may be advantageous for the following reasons: at mass events, the mobile phone connections of the participants are often unstable because there are too many people and too many phones for a single cell tower. Thus, a mobile phone connection may not be available for a particular participant at the moment when the user is at the cash desk system and tries to purchase a good. However, sporadically, there will be a mobile phone connection also at such mass events. Said features make sure that the app automatically, and well before the user actually initiates the authorization process at the terminal, requests an authorization token from the authorization server and receives said token in response. Thus, embodiments of the invention can be used also at mass events with several thousand participants in which the mobile phone connection is unstable and sporadically not available.

According to embodiments, the app monitors the sending of the generated requests for an authorization token. If a generated request could not be sent to the authorization server due to an absence of a mobile phone connection, the sending of said request is automatically repeated by the app until said request was successfully sent to the authorization server. Thus, "sending" in this context means performing program logic that would result in the sending of the request in case a mobile network connection is available. Said term does not imply that the request was in fact successfully sent. This may be advantageous as it is ensured that also in case the mobile phone connection is instable and temporarily unavailable, the request will be sent out immediately when a mobile phone connection is successfully established. No further, manual action is required from the user.

According to embodiments, the authorization server generates the authorization token in response to receiving said request and transmits it to the mobile device. According to embodiments the transmission of the authorization token to the mobile device is in response to a request for the authorization token from the mobile device.

According to embodiments an application, also referred to as 'app', on the mobile device generates the request for the authorization token. Said application may be downloaded from a server, e.g. from the authorization server.

According to embodiments the request for the authorization token from the mobile device and the transmission of the authorization token by the computer processor occurs via a wireless Internet connection or other wireless connection, e.g. a wireless mobile phone network connection. Thus, the mobile device may be configured to request the authorization token via a wireless connection and to receive the authorization token via said wireless connection. The authorization server may be configured for receiving the request and for sending the generated authorization token via the wireless connection. As described above, said wireless connection might not be available reliably. In particular at mass events, the wireless connection may be instable and may be available only sporadically, i.e., only for short time intervals at in unpredictable moments in time.

According to embodiments the authorization of the purchase and the information relating to the product or service is received by the terminal via a wired connection. This may be advantageous as said features ensure that the authorization process at the terminal can be executed quickly and reliably.

According to embodiments the computer processor is configured to delete the authorization token after the authorization or denial of the purchase. Thus, the authorization server may delete the generated authorization code after a purchase process was (successfully or unsuccessfully) terminated. This may increase security as it is ensured that the authorization code is only used once per authorization process. Thus, the authorization token acts as a TAN (transaction authentication number), i.e., a one-time passwords to authorize a transaction that provides additional security e.g. in case the smart phone is lost and the keylock of the smartphone was not activated.

According to embodiments the computer processor is configured to transmit the authorization or denial to the mobile device. The authorization or denial may be transmitted according to any kind of messaging protocol. For example, the authorization or denial may be specified in the form of an XML message, a comma separated file, a binary, serialized data object, or the like. The authorization or denial may be communicated to the mobile device via web services, remote procedure calls or any other kind of data exchange procedure. Preferentially, the authorization and denial is communicated via an interface between an application running on the authorization server and the app running on the mobile device in a fully automated manner.

According to embodiments said telecommunication system comprises the terminal.

According to embodiments, the terminal is a point of sale device ('POS device'). A 'point of sale device', also referred to as 'POS device', 'POS terminal' or electronic point of sale ('EPOS') is a device located at the place where a retail transaction is completed that comprises the required program logic to complete the transaction. A 'point of sale' is the point at which a customer makes a payment to the merchant in exchange for goods or services. In order to complete the transaction, the POS device may calculate the amount owed by the customer and provide options for the customer to make payment. The POS device of the merchant may also issue a receipt for the transaction. The POS device may consist of customized hardware and software. Retailers may utilize weighing scales, scanners, electronic and manual cash registers, EFTPOS terminals, touch screens and any other wide variety of hardware and software available for use with POS. When a POS terminal is used as the terminal, the authorization process at the terminal may comprise a payment process at the terminal. The resources available in the resource account may be consumed or diminished when performing a transaction, e.g. buying a good, getting access to a service, getting access to a building or the like. The resources on the resource account may be money.

Using a POS terminal as the terminal and using said telecommunication system for paying some goods or services may be particularly advantageous in the context of mass events such as sport events. In general, such an event has one or two breaks of around fifteen minutes apiece. During these breaks, crowds of visitors would like to buy merchandise, food, and/or beverages. To avoid long lines and waiting periods on the one hand, and on the other hand to maximize revenue, the entire sales process has to be streamlined. While paying by cash can take quite long as the customer has to count his or her money, and then the cashier has to count again to verify the amount of the cash, the present invention may allow to quickly and automatically pay some goods without entering a PIN with the help of the above described system. Although the network connection may be instable and often not available, the mobile device will be able to generate the code used in the payment process because the authorization token was requested and received in advance. Also, the user does not have to buy a further, specially adapted payment card or authorization card for buying goods at a sports event.

According to embodiments said telecommunication system comprises the mobile device. The mobile device is configured for:
- sending a request for receiving the authorization token to the authorization server, the request comprising a user-ID of a user having assigned said mobile device, the request being sent regularly and/or upon the mobile device automatically determining that the mobile device is located within a predefined distance from the terminal, wherein in case no connection to the authorization server is available, the request is automatically resent until the connection is available and the mobile device receives the requested authorization token;
- receiving the requested authorization token from the authorization server, the authorization token having been generated by the authorization server in response to receiving said request, wherein the authorization token is associated with a resource account of said user;
- creating a code, the code comprising at least the received authorization token.

This may be advantageous, because this may ensure that a code can be generated and is available for the mobile device at the moment when authenticating at the terminal even in case no mobile network connection is available at that very moment. This is because the authentication token is automatically requested and received in advance. Usually, the mobile network connection will be at least temporarily available also in a mass event, so requesting the authentication token e.g. half an hour before the actual authentication event will take place and repeating said request until an internet connection is available and the requested token is received by the mobile device will suffice to ensure that the token is present and the code can be generated at or before the actual authentication event.

In a further aspect, the invention relates to a telecommunication method. The method may be executed by an authorization server. The method may comprise:
- transmitting an authorization token from the authorization server to a mobile device, wherein the authorization token is associated with a resource account, wherein the authorization token is configured such that the authorization token enables the mobile device to create a code, and wherein the code comprises the authorization token;
- receiving by the authorization server from the terminal, in connection with a reading of the code and a purchase of a product or service, the authorization token and information relating to the product or service;
- the authorization server validating the authorization token received from the terminal;
- the authorization server comparing the information relating to the product or service with information associated with the resource account;
- in response to the comparison, the authorization server determining that there is a sufficient amount of resources associated with the resource account to purchase the product or service, and the authorization server authorizing the purchase of the product or service;
- in response to the comparison, the authorization server determining that there is an insufficient amount of resources associated with the resource account to purchase the product or service, and the authorization server denying the purchase of the product or service;
- the authorization server transmitting the authorization or the denial to the terminal; and
- in response to the authorization of the purchase, the authorization server applying a purchase amount to the resource account.

In a further aspect, the invention relates to a telecommunication method executed by a mobile device, e.g. by an application ('app') installed on said mobile device. The method comprises:
- the mobile device sending a request for receiving an authorization token to an authorization server, the request comprising a user-ID of a user having assigned said mobile device; for example, the request may be sent regularly and/or upon determining that the mobile device is located within a predefined geographic area, wherein in case no connection to the authorization server is available, the request is automatically resent until the connection is available and the mobile device receives the requested authorization token;
- the mobile device receiving the requested authorization token from the authorization server, the authorization token having been generated by the authorization server in response to receiving said request, wherein the authorization token is associated with a resource account of said user;
- the mobile device creating a code, the created code comprising the authorization token;
- the mobile device transferring the created code to a terminal for purchasing of a product or service.

According to embodiments the transferring of the code from the mobile device to the terminal comprises:
- the mobile device displaying the code on a display of the mobile device in the form of a one-dimensional or two-dimensional code for enabling the terminal to read said displayed code by means of an optical sensor; or
- the mobile device sending the code to the terminal via an NFC interface.

In a further aspect the invention relates to a computer readable medium comprising instructions that when executed by a processor causes the processor to execute the steps of any one of the previous embodiments.

### Brief description of the drawings

In the following embodiments of the invention are explained in greater detail, by way of example only, making reference to the drawings in which:
- Fig. 1: is a block diagram illustrating an example embodiment of an offline mobile resource account management system.
- Fig. 2: is another block diagram illustrating an example embodiment of an offline mobile resource account management system.
- Figs. 3A and 3B: are a block diagram illustrating operations and features of an offline mobile authorization process and system.
- Fig. 4: is a block diagram of a computer system in connection with which embodiments of the present disclosure can operate.
- Fig. 5: is a flow chart of a method of one embodiment.
- Fig. 6: is a block diagram of a mobile resource account management system.

### Detailed description

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. Furthermore, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

An embodiment includes a telecommunication system where the mobile device is a smart phone. As smart phones are abundantly available today, no additional RFID card has to be acquired by a user in order to be authorized for receiving a good or service. The mobile device automatically submits a request for receiving an authorization token to an authorization server well before the actual request for authorization for said good or service is performed, e.g. half an hour or an hour before said request for authorization is performed at a terminal. In case said request cannot be sent due to an interrupted mobile network connection, the mobile device will automatically repeat sending of the request for the authorization token until said token was successfully received by the mobile device. This ensures that the mobile device can communicate the authorization token to the terminal also in case no mobile network connection is available at the moment when the user reaches the terminal. An embodiment includes a mobile scenario with smart phones that offers the advantages described above in connection with prepaid cards, but avoids the disadvantage wherein a customer has to buy and carry an additional card in his or her wallet. To prepare to use an embodiment disclosed herein, a customer creates a resource account in the form of a virtual account using mobile wallet software, which acts also as an authorization server during a payment process. The customer can store different payment methods and different payment information in the account. For example, the resource account can include information relating to, and/or that is associated with, a bank account for a direct debit scenario, credit card information in order to implement a credit card payment, and a prepaid account in which the customer transfers money to the virtual account.

The offline portion of the embodiment involves the following. Currently, there are already several mobile payment variants out in the market. However, for all of these variants, the mobile phone needs to communicate with the authorization sever during the payment process via the Internet (*via e.g*., 3G, WLAN, *etc.*). However, in a sports arena, the data connection of a mobile phone is normally not very good. Consequently, in an embodiment, the mobile payment process is configured to be offline capable. This is accomplished as follows.

A customer installs an application on his or her smart phone, wherein the customer enters the user credential of his or her mobile wallet where he or she has a prepayment account. The application communicates, at predefined events and/or at regular time intervals, when there is an Internet/data connection available, with a central authorization server of the mobile wallet to get authorization tokens. The authorization tokens are stored in the application, and the tokens have a validity of a configurable time frame (*e.g.*, 1 hour). Thereafter, the customer buys articles in a shop and would like to pay at a check out system (*e.g*., Point of Sales (PoS), Web shop, *etc*). Now, instead of offering an RFID card to a card reader, the application creates a barcode or matrix code (*e.g*., a QR Code) on the display unit of the user's smart phone that can include several pieces of information such as the authorization token, a customer identification, and a loyalty identification. The authorization token is mandatory, while the customer identification and loyalty identification are optional. The cashier scans the barcode that is displayed on the user's smart phone via a two-dimensional barcode scanner, and a cash desk application on the terminal decodes the information. The barcode and the scanner are more or less simply a way of data transfer. In an embodiment, instead of transferring the data via barcode and scanner, near field communication (NFC) could be used. However, not all smartphones offer NFC functionality. A code transferred via the NFC interface may also be referred to as 'quality code'. The terminal may host a terminal application, e.g. a POS application. After the terminal application decodes the information, it sends the relevant information (authorization token) to the authorization server, which validates the token and approves or declines the authorization.

After that, the authorization token is consumed and not useable anymore. The authorization server may delete the reference value of said authorization token. As a result, the authorization server, when validating said authorization token a second time, will not be able to retrieve a matching reference value and will consider said authorization token as invalid. The application program installed on the mobile device will erase each authorization token after its use or label it as used for ensuring that each authorization token stored in a storage component of the mobile device is only used once.

It is noteworthy that the terminal application in general has a stable and fast internet connection, which is able to request an authorization in a fraction of a second. After this, the payment process in general is finished. The authorization server offers the payment information to the smartphone application so that the application shows the payment as soon as the smartphone has a stable internet connection again.

Consequently, an embodiment allows a user to pay with a smart phone instead of carrying several cards, pay with a smart phone in an environment where no internet connection is available, and pay with a smart phone in a very efficient way, faster than by cash or by card wherein a user has to enter a pin or sign a bill.

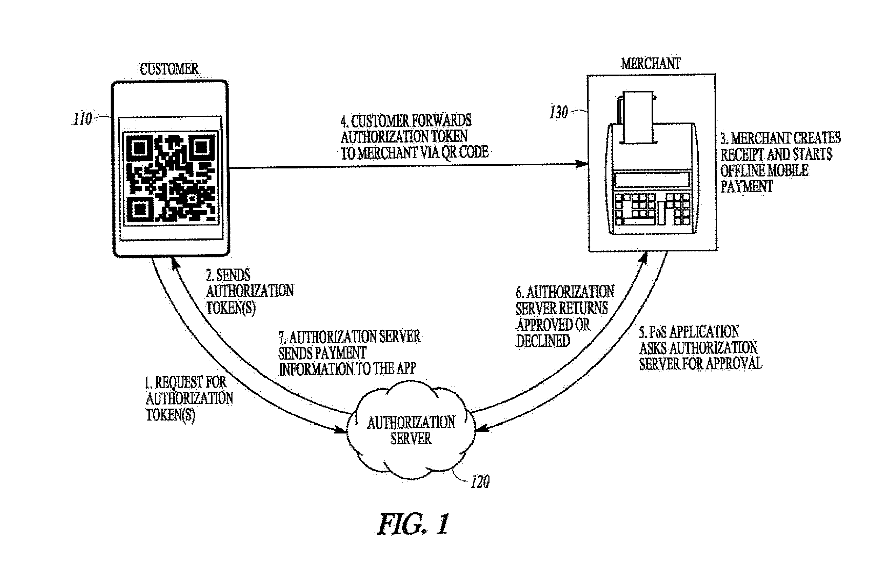

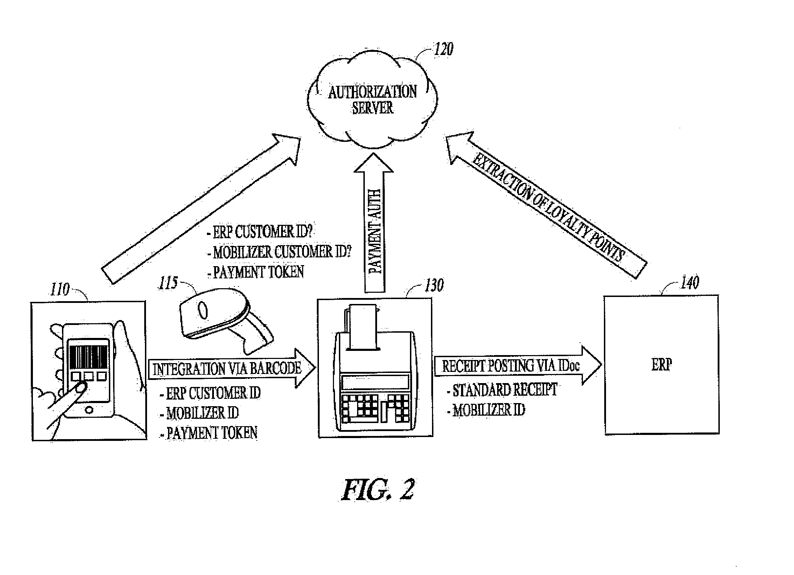

FIGS. 1 and 2 illustrate components of a system embodiment for an offline mobile resource account management system. Referring first to FIG. 1, a customer mobile device 110 requests an authorization token from an authorization server 120. The authorization server 120 sends an authorization token to the customer mobile device 110. The mobile device uses the authorization token to create a code, e.g. a bar code or quality code, and displays the code on the display screen of the mobile device or communicate the code via an NFC interface. A terminal (e.g. POS device) 130 at a merchant location reads the code, and seeks approval for the transaction from the authorization server 120. The authorization server 120 notifies the terminal 130 of the approval or disapproval of the purchase. The authorization server 120 further sends payment information to the mobile device 120.

Referring now to FIG. 2, an embodiment is illustrated that includes integration with an enterprise resource planning (ERP) system. FIG. 2 illustrates several of the components illustrated in FIG. 1, specifically, a mobile device 110, an authorization server 120, and a terminal 130. FIG. 2 further illustrates a scanning device 115 that is associated with the terminal 130. FIG. 2 illustrates that the mobile device 110 requests an ERP customer ID, a mobilizer customer ID (also referred to as 'mobilizer ID', i.e. a customer ID that is valid for a mobile wallet account managed by a mobile wallet application), and a payment token from the authorization server 120. The ERP customer ID can be used in connection with a loyalty program. The mobilizer customer ID can be used in connection with an application used for mobile-phone based payments (a "mobile wallet"). The mobile wallet may be configured to manage the resource account, e.g. a virtual bank account that is linked to a particular bank account, prepaid account or credit card account of the customer. The virtual bank account managed by the mobile wallet application may be assigned to said customer via the mobilize customer ID. Consequently, in an embodiment, a system can include an ERP system and a separate mobile wallet system. A customer can have an ID in one system and a different ID in another system. As noted above, the customer ID and the mobilizer ID are optional. The mobile device 110 then provides the ERP customer ID, the mobilizer ID, and the payment token to the terminal 130. The terminal 130 requests payment authorization from the authorization server 120. The terminal 130 also transmits the mobilizer ID and a standard receipt to the ERP system 140.

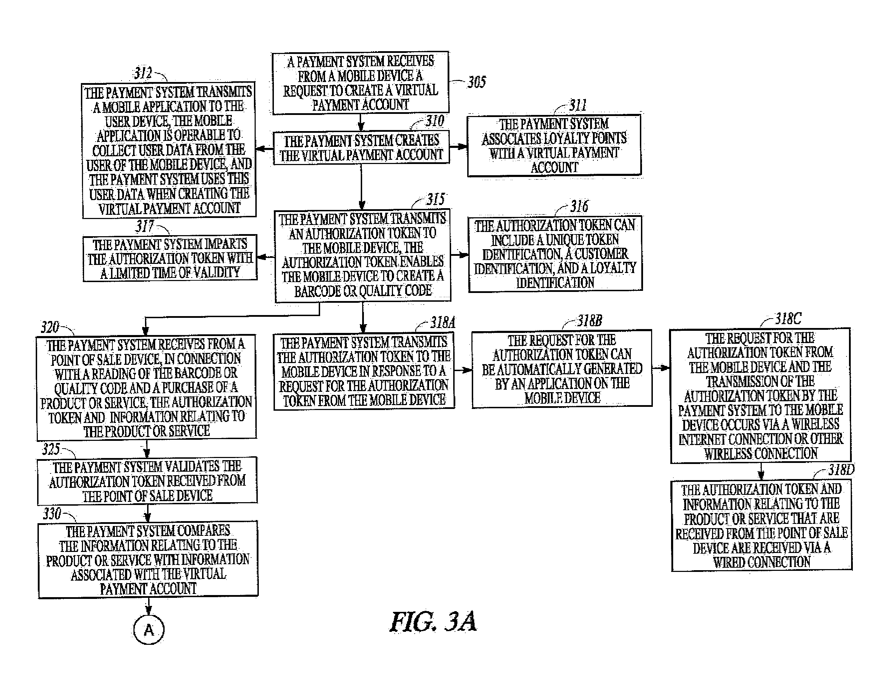

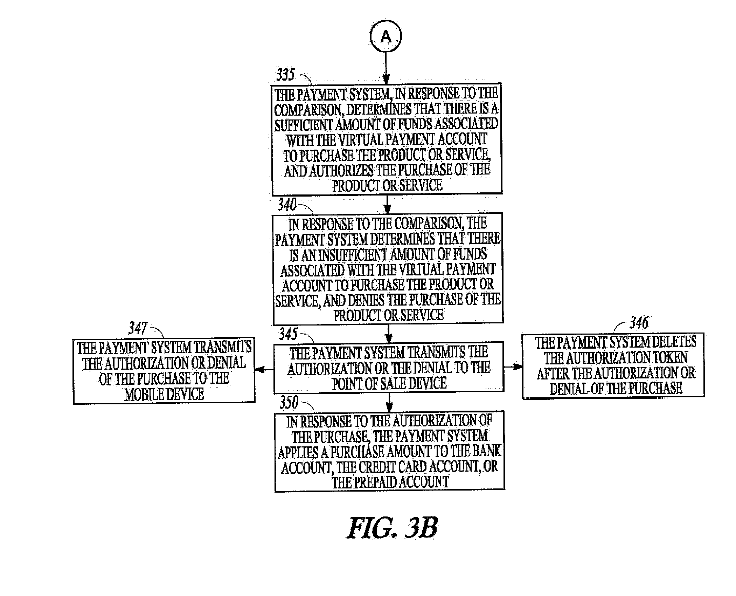

FIGS. 3A and 3B are a block diagram illustrating operations and features of an offline mobile payment process and system. FIGS. 3A and 3B include a number of operation and process blocks 305 - 350. Though arranged serially in the example of FIGS. 3A and 3B, other examples may reorder the blocks, omit one or more blocks, and/or execute two or more blocks in parallel using multiple processors or a single processor organized as two or more virtual machines or sub-processors. Moreover, still other examples can implement the blocks as one or more specific interconnected hardware or integrated circuit modules with related control and data signals communicated between and through the modules. Thus, any process flow is applicable to software, firmware, hardware, and hybrid implementations.

Referring now to FIGS. 3A and 3B, at 305, a resource account management system receives from a mobile device a request to create a resource account. The resource account management system may be hosted by the authorization server or may be hosted on a different server. The different server may be operated by a different person or organization than the authorization server. If the resource account management system is hosted by the different server, the different server grants the authorization server access to the resource accounts created and managed by the resource account management system. The resource account is associated with one or more of a bank account, a credit card account, and a prepaid account. At 310, the resource account management system creates the resource account. In some embodiments, as illustrated at 311, the resource account management system is operable to associate loyalty points with the resource account. At 312, the resource account management system transmits a mobile application to the user device. Alternatively, the mobile application may be provided by the authorization server or another server. The mobile application is operable to collect user data from the user of the mobile device. The resource account management system can use this user data when creating the resource account.

At 315, the resource account management system transmits an authorization token to the mobile device. The authorization token is associated with the resource account, and the authorization token is configured such that the authorization token enables the mobile device to create a code. The code includes the authorization token. Block 316 indicates that the authorization token can include a unique token identification, customer identification, and a loyalty identification. The unique token identification includes a format that the resource account management system can recognize as a valid token, and a unique identifying number and letter combination for each token. Each customer has his or her own unique customer number that can be associated with the token. Some embodiments include a loyalty identification, which identifies a particular buyer loyalty program with which the customer is associated. At 317, the resource account management system imparts the authorization token with a limited time of validity. For example, an authorization token may only be valid for an hour. In other embodiments, the authorization token may be valid for 3-4 hours, that is, the approximate length of a sporting event. An effect of the limited validity time of the authorization tokens is that the resource account management system has to keep track of a smaller number of authorization tokens.

At 318A, the resource account management system transmits the authorization token to the mobile device in response to a request for the authorization token from the mobile device. This request can be initiated by the user of the mobile device, or as indicated at 318B, it can be automatically generated by an application on the mobile device. As noted at block 318C, the request for the authorization token from the mobile device and the transmission of the authorization token by the resource account management system to the mobile device occurs via a wireless Internet connection or other wireless connection. In contrast, as indicated in block 318D, the authorization token and information relating to the product or service that are received from the terminal are received via a wired connection. As noted above, the wired connection at the point of sale is much more stable than a wireless connection of a mobile device, especially in a venue such as a sports arena.

At 320, the resource account management system receives from a terminal, in connection with a reading of the code and a purchase of a product or service, the authorization token and information relating to the product or service. At 325, the resource account management system validates the authorization token received from the terminal, and at 330, compares the information relating to the product or service with information associated with the resource account. At 335, the resource account management system, in response to the comparison, determines that there is a sufficient amount of resources associated with the resource account to purchase the product or service, and authorizes the purchase of the product or service. The resource account management system may be hosted on a server located at the point of sales. Alternatively, the resource account management system may be hosted by a remote server connected to the terminal via a stable, wired network connection. The remote server may be, for example, the authorization server or a different server. At 340, in response to the comparison, the resource account management system determines that there is an insufficient amount of resources associated with the resource account to purchase the product or service, and denies the purchase of the product or service.

At 345, the resource account management system transmits the authorization or the denial to the terminal. At 346, the resource account management system is operable to delete the authorization token after the authorization or denial of the purchase. After authorization or denial of the transaction, the particular authorization token that was used is no longer needed, so the resource account management system cleanses itself of authorization tokens that are no longer needed. At 347, the resource account management system transmits the authorization or denial of the purchase to the mobile device. Finally, at 350, in response to the authorization of the purchase, the resource account management system applies a purchase amount to the resource account.

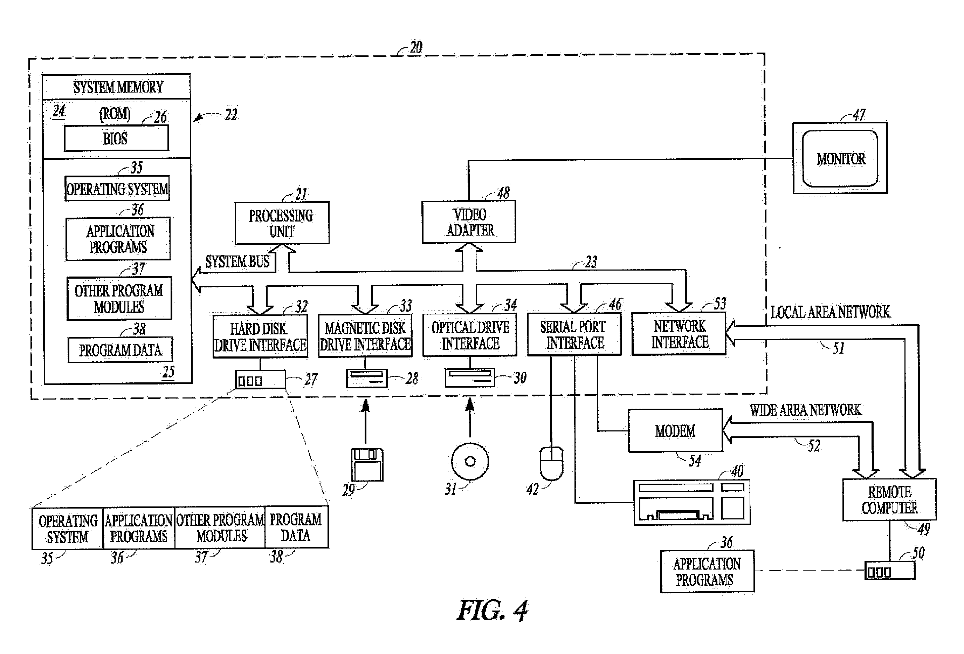

FIG. 4 is an overview diagram of hardware and operating environment in conjunction with which embodiments of the invention may be practiced. The description of FIG. 4 is intended to provide a brief, general description of suitable computer hardware and a suitable computing environment in conjunction with which the invention may be implemented. In some embodiments, the invention is described in the general context of computer-executable instructions, such as program modules, being executed by a computer, such as a personal computer. Generally, program modules include routines, programs, objects, components, data structures, etc., that perform particular tasks or implement particular abstract data types.

Moreover, those skilled in the art will appreciate that the invention may be practiced with other computer system configurations, including hand-held devices, multiprocessor systems, microprocessor-based or programmable consumer electronics, network PCs, minicomputers, mainframe computers, and the like. The invention may also be practiced in distributed computer environments where tasks are performed by I/O remote processing devices that are linked through a communications network. In a distributed computing environment, program modules may be located in both local and remote memory storage devices.

In the embodiment shown in FIG. 4, a hardware and operating environment is provided that is applicable to any of the servers and/or remote clients shown in the other Figures.

As shown in FIG. 4, one embodiment of the hardware and operating environment includes a general purpose computing device in the form of a computer 20 (e.g., a personal computer, workstation, or server), including one or more processing units 21, a system memory 22, and a system bus 23 that operatively couples various system components including the system memory 22 to the processing unit 21. The computer 20 may be used as the authorization server. There may be only one or there may be more than one processing unit 21, such that the processor of computer 20 comprises a single central-processing unit (CPU), or a plurality of processing units, commonly referred to as a multiprocessor or parallel-processor environment. A multiprocessor system can include cloud computing environments. In various embodiments, computer 20 is a conventional computer, a distributed computer, or any other type of computer.

The system bus 23 can be any of several types of bus structures including a memory bus or memory controller, a peripheral bus, and a local bus using any of a variety of bus architectures. The system memory can also be referred to as simply the memory, and, in some embodiments, includes read-only memory (ROM) 24 and random-access memory (RAM) 25. A basic input/output system (BIOS) program 26, containing the basic routines that help to transfer information between elements within the computer 20, such as during start-up, may be stored in ROM 24. The computer 20 further includes a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM or other optical media.

The hard disk drive 27, magnetic disk drive 28, and optical disk drive 30 couple with a hard disk drive interface 32, a magnetic disk drive interface 33, and an optical disk drive interface 34, respectively. The drives and their associated computer-readable media provide non volatile storage of computer-readable instructions, data structures, program modules and other data for the computer 20. It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), redundant arrays of independent disks (e.g., RAID storage devices) and the like, can be used in the exemplary operating environment.

The resource account may be, for example, a virtual payment account. The virtual payment account is a an electronic bank account that allows the user owning said account to perform banking transactions online. A virtual payment account may be, for example, a checking account, a savings account, a certificate of deposit, a money market account, and so on. Users typically use the Internet to check their account balances, transfer funds, and perform financial transactions via their virtual payment account. The virtual payment account may be provided by a conventional bank or a 'virtual bank', whereby a virtual bank is a bank doesn't have own branches, ATMs or cache machines. Nevertheless, customers of virtual banks may access their money with the help of partner banks which run ATMs from which customers can withdraw their money without a fee.

The virtual banking account may be linked to one or more other or 'real' banking accounts. This may be advantageous as the 'real' bank account but may be managed separately from said 'virtual' bank account. This increases the security. For example, it may be possible to limit the maximum amount payable via said virtual payment account per transaction, per day or per month. The 'real' payment account belongs to the user having registered at the authentication server or at a server of a bank for creating the virtual banking account. The 'real' banking account may be, for example, a bank account, a credit card account, and a prepaid account. Preferentially, for security reasons said 'real' account is a prepaid account. The resources associated with the resource account may be funds. If a sufficient amount of funds is associated with the resource account, e.g. the virtual payment account, the user will be authorized by the authorization server to purchase the product or service. Otherwise, the purchasing will be denied. The funds may be, for example, some money deposed on the virtual banking account. The virtual payment account may be associated with one or more of a bank account, a credit card account, and a prepaid account. According to some embodiments, the authorization token comprises also a customer identification and/or a loyalty identification. A loyalty identification may identify the customer or a group of customers for which the customer loyalty shall be determined and/or rewarded. In addition or alternatively, the loyalty identification may identify a particular buyer loyalty program with which the customer is associated. According to some of said embodiments the computer processor is operable to associate loyalty points with the resource account. This may be advantageous for the seller of the goods and services as he or she may gain statistics on the amount and type of purchased goods and services. This may help improving the products and services and help planning advertisement campaigns. The customer identification and/or the loyalty identification may also be advantageous for the customer, e.g. if using said identifiers results in a discount.

A plurality of program modules can be stored on the hard disk, magnetic disk 29, optical disk 31, ROM 24, or RAM 25, including an operating system 35, one or more application programs 36, other program modules 37, and program data 38. A plug in containing a security transmission engine for the present invention can be resident on any one or number of these computer-readable media.

A user may enter commands and information into computer 20 through input devices such as a keyboard 40 and pointing device 42. Other input devices (not shown) can include a microphone, joystick, game pad, satellite dish, scanner, or the like. These other input devices are often connected to the processing unit 21 through a serial port interface 46 that is coupled to the system bus 23, but can be connected by other interfaces, such as a parallel port, game port, or a universal serial bus (USB). A monitor 47 or other type of display device can also be connected to the system bus 23 via an interface, such as a video adapter 48. The monitor 47 can display a graphical user interface for the user. In addition to the monitor 47, computers typically include other peripheral output devices (not shown), such as speakers and printers.

The computer 20 may operate in a networked environment using logical connections to one or more remote computers or servers, such as remote computer 49. These logical connections are achieved by a communication device coupled to or a part of the computer 20; the invention is not limited to a particular type of communications device. The remote computer 49 can be another computer, a server, a router, a network PC, a client, a peer device or other common network node, and typically includes many or all of the elements described above I/0 relative to the computer 20, although only a memory storage device 50 has been illustrated. The logical connections depicted in FIG. 4 include a local area network (LAN) 51 and/or a wide area network (WAN) 52. Such networking environments are commonplace in office networks, enterprise-wide computer networks, intranets and the internet, which are all types of networks.

When used in a LAN-networking environment, the computer 20 is connected to the LAN 51 through a network interface or adapter 53, which is one type of communications device. In some embodiments, when used in a WAN-networking environment, the computer 20 typically includes a modem 54 (another type of communications device) or any other type of communications device, e.g., a wireless transceiver, for establishing communications over the wide-area network 52, such as the internet. The modem 54, which may be internal or external, is connected to the system bus 23 via the serial port interface 46. In a networked environment, program modules depicted relative to the computer 20 can be stored in the remote memory storage device 50 of remote computer, or server 49. It is appreciated that the network connections shown are exemplary and other means of, and communications devices for, establishing a communications link between the computers may be used including hybrid fiber-coax connections, T1-T3 lines, DSL's, OC-3 and/or OC-12, TCP/IP, microwave, wireless application protocol, and any other electronic media through any suitable switches, routers, outlets and power lines, as the same are known and understood by one of ordinary skill in the art.

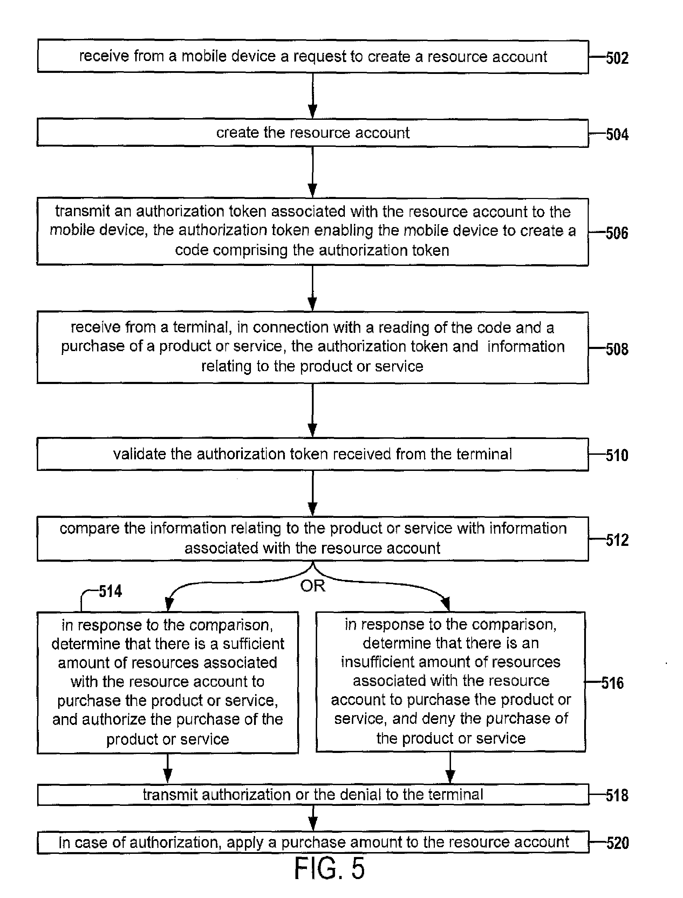

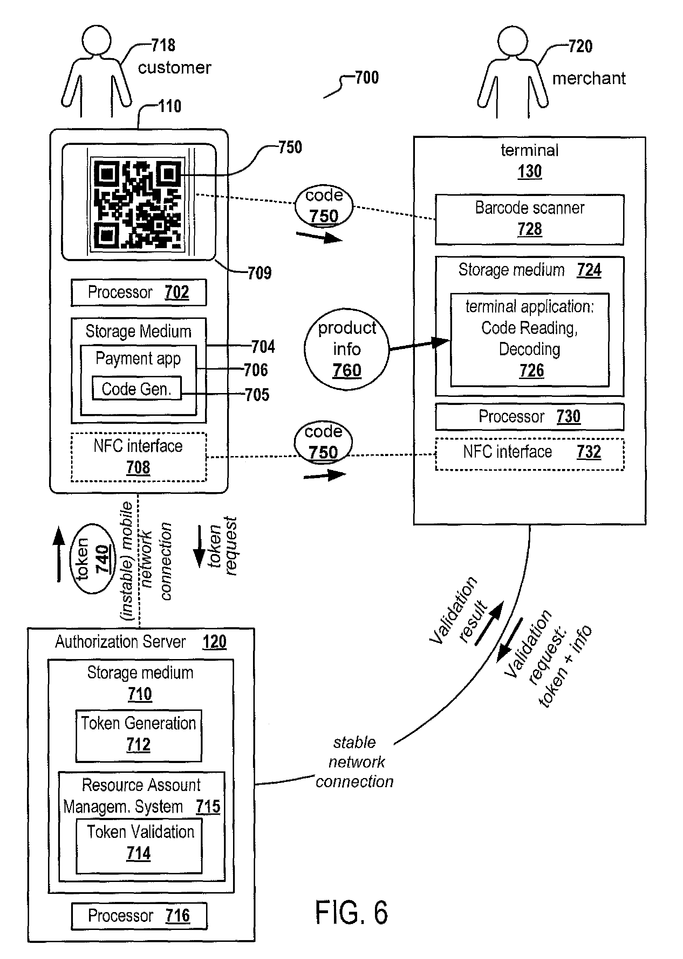

Figure 5 is a flowchart of a method according to one embodiment of the invention. Fig. 6 is a block diagram of a mobile resource account management system. In the following, the method depicted in figure 5 will be described by making reference to the mobile resource account management system depicted in figure 6.

In step 502, the authorization server 120 receives a request for creating a resource account for a customer 718. The request is submitted from a mobile device 110 owned by said customer. In response to receiving said request, a resource account management system 715, e.g. an application program or module running on the authorization server 120, creates the resource account. The creation may comprise the user providing registering information such as name and address to the resource account management system 715 and the user 718 linking an existing banking account, e.g. a prepaid account, to the newly created virtual banking account.

In a further step, a payment application 706 running on the mobile device 110 sends a request for an authorization token via a mobile network connection to the authorization server 120. The request may be sent fully automatically, e.g. upon the user 718 starting the payment application 706, upon the user (and his or her phone) entering a sports arena, upon the user (and his or her phone) approaching a point of sale or at predefined time intervals. Alternatively, the payment application 706 may display some selectable GUI elements allowing the user to manually trigger the sending of the request for the authorization token. The payment application monitors if the request was successfully sent to the authorization server 120. In case the request could not be sent due to a lack of a network connection, the application 706 repeats the sending of the authorization token request until the network connection was reestablished and the request was successfully transmitted. The request may comprise a customer ID of the customer 718.

In response to receiving the authorization token request, the authorization server 120 creates the authorization token 740 and returns said token to the payment application 706 via said mobile network connection. The token generation may be executed by a token generation module 712. An identifier of the associated resource account and/or an identifier of the customer may be returned together with the authorization token 740 to the payment application 706 in step 506. The payment application 706 stores the received authorization token 740 in a storage medium 704 of the mobile device. The storage medium 704 may have stored a plurality of authorization tokens. Each authorization token may comprise an expiration time. The payment application 706 may regularly check the expiration times of the authorization tokens stored in the storage medium 704. The payment application 706 may automatically erase any expired authorization tokens from the storage 704.

In case the user 718 wants to buy a particular product within the expiration time of the received authorization token 740, the user may carry said product to the terminal 130 and interact with the payment application for causing the application 706 to generate a code 750 that comprises at least the authorization token. The generated code 750 is displayed on a display 709 of the mobile device 110. A merchant 720 working at a terminal 130 may use a bar code scanner 728 for reading product information 760, in particular the price, and/or for reading the code 750 presented on the display 709. Alternatively, the code 750 may be transmitted via near field communication (NFC) interfaces 708, 732 of the mobile device and the terminal. The information 760 may also be entered manually into the terminal application 726.

The merchant 720 may now start verifying that the customer 718 has enough money on his or her resource account to buy the desired product. For this purpose, the terminal application 726 stored in storage medium 724 of the terminal 130 decodes the received code 750 and extracts the authorization token and the optional additional information, if any. The terminal application 726 creates a validation request that comprises the extracted authorization token and some information related to the desired product, in particular the product price. The validation request is sent by the terminal application 726 via a stable, wired network connection to the resource account management system 715 of the authorization server 120.

In step 508, the resource account management system 715 of the authorization server 120 receives from the terminal 130 the authorization token and some information relating to the product the customer 718 wants to purchase at the terminal 130. The information 760 relating to the product or service may be the price of said product or service, discount information, product-IDs and the like. The information 760 may be automatically read by the terminal 130 e.g. by means of a bar code scanner, or may be manually entered by the merchant 720 or his or her employee in the terminal.

In step 510, a token validation module 714 of the resource account management system 715 validates the authorization token received from the terminal 130, e.g. a POS device. The validation may comprise comparing the received authorization token with a reference value. The reference value may have been stored by the authorization server 120 in storage medium 710 when creating the authorization token 740. The reference value may be a copy of the created authorization token. An authorization token is considered as valid if the token validation module 714 is able to retrieve a reference value that is equal to the received authorization token. In some embodiments, the token validation module 714 may in addition evaluate if the received authorization token has expired and will only consider the received authorization token as valid if it has not expired at the moment of validation. In a further step, the resource account management system 715 evaluates if there is a sufficient amount of resources associated with the original payment account of the customer 718 to purchase the product. If it is determined in step 514 that there is a sufficient amount associated with the account, the resource account management system 715 will transmit in step 518 an authorization to the terminal 130. If it is determined in step 516 that there is not a sufficient amount associated with the account, the resource account management system 715 will transmit in step 518 a denial to the terminal 130. Finally, in step 520, if the purchase is authorized by the resource account management system, the resource account management system 715 applies the purchase amount to the resource account of the customer 718.

## Claims

1. A telecommunication system comprising an authorization server (120), the authorization server comprising a computer processor (716) configured to:
- transmit (506) an authorization token (740) to a mobile device (110), wherein the authorization token is associated with a resource account, wherein the authorization token enables the mobile device to create a code (750), the code comprising the authorization token;
- receive (508) from a terminal (130), in connection with a reading of the code and a purchase of a product or service, the authorization token and information (760) relating to a product or service;
- validate (510) the authorization token received from the terminal;
- compare (512) the information relating to the product or service with information associated with the resource account;
- in response to the comparison, determine (514) that there is a sufficient amount of resources associated with the resource account to purchase the product or service, and authorize the purchase of the product or service;
- in response to the comparison, determine (516) that there is an insufficient amount of resources associated with the resource account to purchase the product or service, and deny the purchase of the product or service;
- transmit (518) the authorization or the denial to the terminal; and
- in response to the authorization of the purchase, apply (520) a purchase amount to the resource account.

2. The telecommunication system of claim 1, further comprising a resource account management system (715), the resource account management system being operable to:
- receive (502) from the mobile device (110) a request to create the resource account;
- create (504) the resource account.

3. The telecommunication system of any one of the previous claims, wherein the computer processor (716) is configured to impart the authorization token (740) with a limited time of validity.

4. The telecommunication system of any one of the previous claims, wherein the transmission of the authorization token (740) to the mobile device is in response to a request for the authorization token from the mobile device.

5. The telecommunication system of claim 4, wherein an application (706) of the mobile device generates the request for the authorization token.

6. The telecommunication system of any one of the previous claims 4-5, wherein the request for the authorization token from the mobile device and the transmission of the authorization token by the computer processor occurs via a wireless Internet connection or other wireless connection.

7. The telecommunication system of any one of the previous claims, wherein the authorization of the purchase and the information relating to the product or service is received by the terminal via a wired connection.

8. The telecommunication system of any one of the previous claims, wherein the computer processor (716) is configured to delete the authorization token (740) after the authorization or denial of the purchase.

9. The telecommunication system of any one of the previous claims, wherein the computer processor (716) is configured to transmit the authorization or denial to the mobile device.

10. The telecommunication system of any one of the previous claims, further comprising the terminal.

11. The telecommunication system of any one of the previous claims, wherein the terminal is a POS-terminal.

12. The telecommunication system of any one of the previous claims, wherein the computer processor is configured to transmit a mobile application (706) to the user device, the mobile application being configured to collect user data from the user of the mobile device, the user data relating to the creation of the resource account.

13. The telecommunication system of any one of the previous claims, the telecommunication system comprising the mobile device (110), wherein the mobile device (110) is configured for:
- sending a request for receiving the authorization token to the authorization server (120), the request comprising a user-ID of a user (718) having assigned said mobile device, the request being sent regularly and/or being sent upon the mobile device automatically determining that the mobile device is located within a predefined distance from the terminal, wherein in case no connection to the authorization server is available, the request is automatically resent repeatedly until the connection is available and the mobile device receives the requested authorization token;
- receiving the requested authorization token (740) from the authorization server, the authorization token having been generated by the authorization server in response to receiving said request, wherein the authorization token is associated with a resource account of said user;
- creating a code (750), the code comprising at least the received authorization token;
- transferring the created code from the mobile device to the terminal (130) for purchasing the product or service.

14. A telecommunication method comprising:
- transmitting (506) an authorization token (740) from an authorization server (120) to a mobile device (110), wherein the authorization token is associated with a resource account, wherein the authorization token is configured such that the authorization token enables the mobile device to create a code (750), wherein the code comprises the authorization token;
- receiving (508) by the authorization server (120) from the terminal (120), in connection with a reading of the code and a purchase of a product or service, the authorization token and information (760) relating to the product or service;
- the authorization server (120) validating (510) the authorization token received from the terminal;
- the authorization server comparing (512) the information relating to the product or service with information associated with the resource account;
- in response to the comparison, the authorization server determining (514) that there is a sufficient amount of resources associated with the resource account to purchase the product or service, and the authorization server authorizing the purchase of the product or service;
- in response to the comparison, the authorization server determining (516) that there is an insufficient amount of resources associated with the resource account to purchase the product or service, and the authorization server denying the purchase of the product or service;
- the authorization server transmitting (518) the authorization or the denial to the terminal; and
- in response to the authorization of the purchase, the authorization server applying (520) a purchase amount to the resource account.

15. A telecommunication method comprising:
- a mobile device (110) sending a request for receiving an authorization token to an authorization server (120), the request comprising a user-ID of a user (718) having assigned said mobile device, the request being sent regularly and/or being sent upon the mobile device automatically determining that the mobile device is located within a predefined distance from the terminal, wherein in case no connection to the authorization server is available, the request is automatically resent repeatedly until the connection is available and the mobile device receives the requested authorization token;
- the mobile device receiving the requested authorization token (740) from the authorization server, the authorization token having been generated by the authorization server in response to receiving said request, wherein the authorization token is associated with a resource account of said user;
- the mobile device creating a code (750), the code comprising at least the received authorization token;
- the mobile device transferring the created code to a terminal (130) for purchasing of a product or service.

16. The telecommunication method of claim 15, wherein the transferring of the created code from the mobile device to the terminal (130) comprises:
- the mobile device (110) displaying the code on a display (709) of the mobile device in the form of a one-dimensional or two-dimensional code for enabling the terminal to read said displayed code by means of an optical sensor (728); or
- the mobile device (110) sending the code to the terminal via an NFC interface (708, 732).

17. A computer readable medium comprising instructions that when executed by a processor causes the processor to execute the steps of any one of the previous claims 14-16.

## Amended claims

### Amended claims in accordance with Rule 137(2) EPC.

1. A telecommunication system comprising an authorization server (120), the authorization server comprising a computer processor (716) configured to:
- transmit (506) an authorization token (740) to a mobile device (110) in response to a request for the authorization token from the mobile device, wherein the authorization token is associated with a resource account, wherein the authorization token enables the mobile device to create a code (750), the code comprising the authorization token;
- receive (508) from a terminal (130) to which said code was transferred from the mobile device for purchasing a product or service, in connection with a reading of the code and a purchase of a product or service, the authorization token and information (760) relating to the product or service;
- validate (510) the authorization token received from the terminal;
- compare (512) the information relating to the product or service with information associated with the resource account;
- in response to the comparison, determine (514) that there is a sufficient amount of resources associated with the resource account to purchase the product or service, and authorize the purchase of the product or service;
- in response to the comparison, determine (516) that there is an insufficient amount of resources associated with the resource account to purchase the product or service, and deny the purchase of the product or service;
- transmit (518) the authorization or the denial to the terminal;
- delete the authorization token (740) after the authorization or denial of the purchase; and
- in response to the authorization of the purchase, apply (520) a purchase amount to the resource account.

2. The telecommunication system of claim 1, further comprising a resource account management system (715), the resource account management system being operable to:
- receive (502) from the mobile device (110) a request to create the resource account;
- create (504) the resource account.

3. The telecommunication system of any one of the previous claims, wherein the computer processor (716) is configured to impart the authorization token (740) with a limited time of validity.

4. The telecommunication system of any one of claims 1-3, wherein an application (706) of the mobile device generates the request for the authorization token.

5. The telecommunication system of any one of the previous claims 4-5, wherein the request for the authorization token from the mobile device and the transmission of the authorization token by the computer processor occurs via a wireless Internet connection or other wireless connection.

6. The telecommunication system of any one of the previous claims, wherein the authorization of the purchase and the information relating to the product or service is received by the terminal via a wired connection.

7. The telecommunication system of any one of the previous claims, wherein the computer processor (716) is configured to transmit the authorization or denial to the mobile device.

8. The telecommunication system of any one of the previous claims, further comprising the terminal.

9. The telecommunication system of any one of the previous claims, wherein the terminal is a POS-terminal.

10. The telecommunication system of any one of the previous claims, wherein the computer processor is configured to transmit a mobile application (706) to the user device, the mobile application being configured to collect user data from the user of the mobile device, the user data relating to the creation of the resource account.

11. The telecommunication system of any one of the previous claims, the telecommunication system comprising the mobile device (110), wherein the mobile device (110) is configured for:
- sending a request for receiving the authorization token to the authorization server (120), the request comprising a user-ID of a user (718) having assigned said mobile device, the request being sent regularly and/or being sent upon the mobile device automatically determining that the mobile device is located within a predefined distance from the terminal, wherein in case no connection to the authorization server is available, the request is automatically resent repeatedly until the connection is available and the mobile device receives the requested authorization token;
- receiving the requested authorization token (740) from the authorization server in response to sending the request, the authorization token having been generated by the authorization server in response to receiving said request, wherein the authorization token is associated with a resource account of said user;
- creating a code (750), the code comprising at least the received authorization token;
- transferring the created code from the mobile device to the terminal (130) for purchasing the product or service.

12. A telecommunication method comprising:
- transmitting (506), in response to receiving a request for an authorization token from a mobile device (110), the authorization token (740) from an authorization server (120) to the mobile device (110), wherein the authorization token is associated with a resource account, wherein the authorization token is configured such that the authorization token enables the mobile device to create a code (750), wherein the code comprises the authorization token;
- receiving (508) by the authorization server (120) from a terminal (120) to which said code was transferred from the mobile device for purchasing a product or service, in connection with a reading of the code and a purchase of a product or service, the authorization token and information (760) relating to the product or service;
- the authorization server (120) validating (510) the authorization token received from the terminal;
- the authorization server comparing (512) the information relating to the product or service with information associated with the resource account;
- in response to the comparison, the authorization server determining (514) that there is a sufficient amount of resources associated with the resource account to purchase the product or service, and the authorization server authorizing the purchase of the product or service;
- in response to the comparison, the authorization server determining (516) that there is an insufficient amount of resources associated with the resource account to purchase the product or service, and the authorization server denying the purchase of the product or service;
- the authorization server transmitting (518) the authorization or the denial to the terminal;
- the authorization server deleting the authorization token (740) after the authorization or denial of the purchase; and
- in response to the authorization of the purchase, the authorization server applying (520) a purchase amount to the resource account.

13. A mobile device (110) being configured for:
- sending a request for receiving an authorization token to an authorization server (120), the request comprising a user-ID of a user (718) having assigned said mobile device, the request being sent regularly and/or being sent upon the mobile device automatically determining that the mobile device is located within a predefined distance from the terminal, wherein in case no connection to the authorization server is available, the request is automatically resent repeatedly until the connection is available and the mobile device receives the requested authorization token;
- receiving, in response to the request, the requested authorization token (740) from the authorization server, the authorization token having been generated by the authorization server in response to receiving said request, wherein the authorization token is associated with a resource account of said user;
- creating a code (750), the code comprising at least the received authorization token;
- transferring the created code to a terminal (130) for purchasing of a product or service.

14. The mobile device of claim 13, wherein the transferring of the created code from the mobile device to the terminal (130) comprises:
- the mobile device (110) displaying the code on a display (709) of the mobile device in the form of a one-dimensional or two-dimensional code for enabling the terminal to read said displayed code by means of an optical sensor (728); or
- the mobile device (110) sending the code to the terminal via an NFC interface (708, 732).

15. A computer readable medium comprising instructions that when executed by a processor causes the processor to execute the steps of claim 12.
